(19)

**Europäisches Patentamt**

**European Patent Office**

**Office européen des brevets**

(11) **EP 3 315 030 A1**

(12) **EUROPEAN PATENT APPLICATION**

(43) Date of publication:
02.05.2018 Bulletin 2018/18

(51) Int Cl.:
*A23K 10/00* (2016.01)    *A23K 10/20* (2016.01)
*A23K 10/30* (2016.01)    *A23K 20/20* (2016.01)
*A23K 20/28* (2016.01)

(21) Application number: **17198964.3**

(22) Date of filing: **27.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.10.2016   PL 41927516**

(71) Applicant: **CIECH R&D Sp. z o.o.
00-684 Warszawa (PL)**

(72) Inventors:
• **NADZIAKIEWICZ, Malgorzata
38-400 Krosno (PL)**
• **MICEK, Piotr
32-082 Zelkow (PL)**

(74) Representative: **Patpol Kancelaria Patentowa Sp.
z o.o.
Nowoursynowska 162J
02-776 Warszawa (PL)**

(54) **HALLOYSITE FOR USE AS A FEED ADDITIVE AND METHOD TO INCREASE GROWTH, VIABILITY AND PERFORMANCE OF POULTRY**

(57)   The present invention pertains to use of an alumino silicate, Dunino halloysite, as a feed additive, which additive influences beneficially not only the productivity, but also wholesomeness of animals, better feed utilization and improvement in parameters and quality of the meat obtained from the animals. The present invention pertains also to a method for increasing growth, vitality and yield of poultry.

EP 3 315 030 A1

**Description**

The present invention relates to use of an aluminosilicate, Dunino halloysite, as a feed additive, which beneficially influences not only productivity, but also wholesomeness of animals, better utilization of the feed and improvement in parameters and quality of the meat obtained from the animals. The present invention relates also to a method of increasing poultry growth, vitality and yield.

**Background of the invention**

Continuously increasing demand for food, including the high-energy animal protein, that satisfies the need of providing essential nutrients for the ever-growing human population, constitutes nowadays a significant influence on in agricultural sciences for conducting research upon still newer, more efficient feed materials, in particular feed additives. However, among the problems to be solved by such new materials or feed additives, apart from the mass animal production growth, which corresponds to the increase of the amount of the food produced, improving health state of the animals, high quality and safety of the animal products produced for the final consumer and reduction of negative influence of mass rearing to the environment, are also addressed at the present moment. Thereby ones of the candidates of the first choice for use as the feed additives from among these of interest for a number of research groups are the products of a natural origin, which would not only support healthy growth of animals, but also would be neutral for the environment.

Natural silicic acid salts are listed amongst such explored additives. Therefore, admixing various additives in the form of natural silicates to the feed employed in the intensive farming (fattening) of animals, including poultry, and chiefly broiler chicken farming, is commonly known today.

First references to the usage of such additives are present in the publications dating as far back as the sixties and seventies of the previous century. E.J. Day et al. in "Silicates in Broiler Diets", Poultry Science 49(1), 1970, 198-202, describes the use of bentonite and 2 types of kaolinite in various dosages (1%, 3%, 5% and 10% by weight) in the broiler farming. However, studies described in the publication were aimed at determining whether the bentonite and kaolinite additives used for reducing water consumption, and consequently loose droppings, due to their hydroscopic properties, influence a nutritional value of the feed. Based on the studies conducted it was only stated that such additives, used in lower doses in particular, do not influence in any degree the nutritional content of the diet.

It was also found that the natural aluminosilicates exhibit the capability to bind not only water, but also various toxins.

For example, there are numerous products containing various natural aluminosilicates available presently on the market. However, such products (i.e. Toxiroak, Amytox, Baracid) are employed as feed additives for adsorbing or absorbing toxins contained in feed materials, including, for example, reducing contamination by mycotoxins, or toxins of biological origin comprising common contaminant of raw materials of both vegetable and animal origin.

Numerous publications are also known in the prior art which directly disclose use of various silty materials, for example calcium montmorillonite, a silty mineral reckoned among the smectite group, as feed additives, mainly useful as an additive to animal feed. For example, the patent description of EP0551331B1 discloses exactly such use of montmorillonite as a mycotoxin adsorbent. Toxin binding serves a purpose of enhancing quality of feed, which contains substances harmful to the animals, and thus increasing poultry or livestock production.

Similarly, the document US3687680 discloses not only animal feed containing from 1 to 20% (optimally, about 10%) of the naturally occurring montmorillonite clay mineral in a nutritionally balanced diet, but also a method of raising poultry and a method of increasing growth, vigor and productivity of poultry, which comprises using feed containing such a clay. The description discloses also that presence of the clay reduces the mortality rate of poultry, and increases also the body weight and productivity of egg laying, and the droppings containing montmorillonite are drier. However, this document, as well as the publication EP0551331B1 concerning use of montmorillonite, the studies conducted pertained to laying hens, which due to different raising purpose are characterized by different genetic traits and hormonal equilibrium other than broilers.

Further, publications by M. Safaei Katouli et al., "Effect of different levels of kaoli, benzonite and zeolite on Broilers performance", Journal of Biological Sciences 10(1), 2010, 58-62 and M. Hadj Ayed et al., "Effect of septolite supplementation on broiler growth performances and carcass yield", American Society of Animal Science, 59, 2008, 169-172 describe studies on use of additives of the silty mineral group, such as kaolin, bentonite or zeolite in broiler raising, including Ross 308 breed broilers. However, the studies concentrated only on determining the weight gain of animals and economic consequences of that gain. Also in this case there was no mention or suggestion on the influence of the additive on either the health of the fattened broilers, or improvement on parameters/quality of the meat obtained therefrom, or improvement of their raising conditions, or positive influence of use of such additives on the environment.

Smectites are, however, minerals of a very specific structure, an thus of a different characteristics as compared with other, structurally different silicate minerals, such as, for example, minerals of kaolinite group. Differences in structural and chemical build of these minerals essential to the extent that they result in diversified physical and physical-chemical properties of these minerals as compared with other minerals known in the art.

Use of kaolinites as components of feed materials and/or feed additives is also known in the prior art.

For example, the patent description of US4976977 discloses comminuted, loose pelletizing agent of a nutritional value comprising discrete agglomerates of absorbent clay as a major component, and molasses as a minor component, halloysite being recited as a suitable clay. The agent is employed in animal feed, including feed intended for poultry, but first of all its function is to prolong the life of feed on its storage and to better exploit the energetic value of the feed.

A further document, the publication No. US5639492, discloses a method of increasing the nutritional value of the contaminated feed by adding acid-activated artificial montmorillonite clay, a composition of such feed comprising at least 0,01% of said clay and a method of increasing nutritional value of said feed. Indeed, according to the publication, it is disclosed that the described acid-activation method can be also applied for other clays, including halloysite.

Use of an acid-activated phyllosilicate for mycotoxin adsorption was also disclosed in the patent application No. US2004/0028678 A1, where montmorillonite clay (bentonite), traditionally utilized as the feed additive, and natural blends of attapulgite and halloysite being listed as a suitable silicate. The application discloses also an adsorbent of mycotoxins and a feed comprising said acid-activated phyllosilicate, and also a method for improving usefulness of a mycotoxin-contaminated feed. However, as in the case of the remaining above-discussed applications, the document pertains to harmfulness of the mycotoxin-contaminated feed.

Next, the document No. US 2008/0248155A1 discloses a process for adsorbing mycotoxins, comprising adding stevensite to the mycotoxin-containing material, and a method for improving the mycotoxin-containing animal feed. Stevensite, in contrast to minerals employed according to the above-discussed disclosures, belongs to silicates containing no aluminum. Moreover, the publication refers only to use of the acid-activated mineral.

The subsequent US application document No. US2012/0219683A1 discloses an animal feed containing a clay and activated carbon as an adsorbent material, where halloysite, optionally in admixture with attapulgite, is recited as a suitable clay. Again however, as in the case of the above-discussed prior art publications, said disclosure pertains only to inactivation of mycotoxins in a contaminated feed by use of a composition of any silty synthetic or natural mineral, additionally in a combination with activated carbon. The combination of halloysite with activated carbon provides said composition with new properties, different from the properties of halloysite used independently. Freedom of choice of the silty mineral, with disregard for their diverse composition and properties, indicates rather the effect obtained in the application as being the result of widely known strong capacity of activated carbon to absorb harmful substances. At the same time, activation of the mineral with an acid introduces the element of chemical processing to obtain the effects.

Next, from the publication No. US2015/0335591A1 a composition is known comprising a complex containing an edible clay and a volatile antimicrobial agent, and also a process for preparing thereof. This composition is described as an food additive, intended for use in poultry feeding, acting as a growth promoter and reducing the risk of mycotoxin contamination. The molecular complex provided in the application consists of an arbitrary edible silty natural or synthetic mineral, utilized in agricultural feeds or pharmaceutics in combination with volatile molecules of thymol, cresol, carvacrol, methanol, eugenol, cinnamic aldehyde. These substance are used as having antibacterial, antiparasitic, antifungal, intestine and bile duct-protective and immunological system-stimulating properties. However, the mineral used in this composition played a part of a carrier and stabilizing auxiliary substance.

Thus, the solutions known in the art concerning use of aluminosilicates, including halloysite in particular, as a feed additive decide on prolongation of the feed life upon storage thereof and improvements in utilization of energetic value of the feed. In reference to improving quality of feed, such additives are usable as mycotoxin-adsorbing additives, which translates to the increase in productivity of the farming by reducing mortality, as well as increasing growth rate and the increase in weight as an effect of using less contaminated feed. However, halloysite used in the art is added to the mixtures (feedingstuffs) along with another minerals or components.

The present inventors, in contrast to the discussed prior art, were looking for such a feed additive usable in the broiler raising, which would find use as a natural, chemically untreated additive for industrial products and individual feed additive, usable in both conventional and ecological farming. Such an additive, apart from increasing broiler weight (including an increase in the weight of the pectoral muscles), decreasing the weight of giblets, would contribute additionally to the significant enhancement in qualitative parameters of the meat. Among the preferable parameters that could be mentioned, due to reducing the weight of a liver and reducing the weight of the gizzard, the reduction of a percentage of a liver and the gizzard in the carcass. Such an additive would also influence the well-being of the animals due to amelioration of the environmental conditions by reducing a concentration of harmful gases in the air. Such a change should also positively influence the working conditions of farming operators, as well as reduce the environmental nuisance of the stock-farming. Such an additive could be also usable in various types of feed. Achievement of the benefits listed above is desired not only for low-quality feed, but also in the case of high-quality, mycotoxin-free feed, which requires the beneficial influence of the additive being independent of the feed quality improvement.

The present inventors unexpectedly found that selection of a particular type of aluminosilicate, Dunino halloysite, assures not only obtaining all required parameters of the poultry, broiler farming, but is at the same time safe for the environment, enables not only improvement in the health conditions of the farming animals, but also, apart from increasing the farming yield, assures the required quality and safety for the final consumer of the animal products obtained with such a feed additive. This additive provides benefits regardless of both the kind of feed used and its quality. At the same time it was found that the additive unexpectedly influenced improvement in the meat quality and its health-promoting value by reducing the value of the parameter b, which defines a yellow dye, reducing the triacylglycerol blood levels, reducing the total blood cholesterol and reducing the undesired LDL lipoprotein fraction blood levels. The additional unexpected effect that was observed is the increase in the femur mass, increase in the tibial bone mass, increase in the tibial bone shaft width, which influences well-being of the birds by reducing the well-known effect of lagging of the skeletal system growth behind the bird weight increase rate in the poultry raising, which leads to bone injuries. The additive influenced also unexpectedly the well-being of the animals by enhancing the environmental conditions through reducing humidity of the bedding. Reduction of harmful gas concentrations was obtained. The level of ammonia gas reduction in the air of 48% was unexpected. Such elevated level of environmental effects obtained influences significantly the working conditions of farming operators, as well as and environmental nuisance of the farming.

Dunino halloysite, as defined in the present application, is halloysite mined from the deposit of basalt detritus of Dunino located on the territory of the Republic of Poland near Legnica. Halloysite is a mineral of the volcanic origin which is distinguishable by its high porosity (60-70%) and specific surface area (65-85 $m^2/g$), high ion-exchange, ease of chemical and mechanical processing. In contrast to another minerals such as e.g. montmorillonite it is not water-swellable. Halloysite of Dunino is a two-layered mineral of the 1:1 type structure. Between the layers, molecules of water are located to create the monomolecular space. In a hydrated form of halloysite the distance between planes is 10 Å, with 7 Å in a dehydrated form. Thus, the difference in the distance is 3 Å, or a thickness of the monomolecular layer of water molecules. Hydrated halloysite is characterized by little stability depending to the significant degree on humidity, with the transition to dehydrated halloysite possible to occur even at the room temperature. Two kinds of water could be distinguished in the interpacket space of halloysite [Costanzo P.M., Giese R.F., Lipsicas M., 1984, Static and dynamic structure of water in hydrated kaolinites. Clays and clay Minerals, 32, 419-428]. The first kind is a so-called "hole water", localized in voids of ditrigonal rings and probably creating hydrogen bonds with tetrahedral oxygens. The second kind, a so-called "associated water", creates a mobile layer and this is water loosely bound with a mineral, in contrast to water of the "hole water" type. Halloysite (10 Å) contains both kinds of water, while in the interpacket halloysite (7 Å) only the "associated" type water is present.

At the temperature of about 60°C and at long-term drying, Dunino halloysite loses water and converts to metahalloysite of the chemical formula identical with formula of kaolinite, but with completely different disturbed structure (in contrast to the ordered structure of kaolinite), to which the exceptional properties of the mineral are attributed. Properties of halloysite can be changed by suitable mechanical, thermic and chemical modifications to enhance the existing properties or obtaining additional desirable features. Halloysite of the "Dunino" stone-pit, referred to in the present description as Dunino halloysite, is characterized by a specific laminar-tubular structure. Conducted test revealed the halloysite (7 Å) to kaolinite ratio of 66 : 34. The internal tube diameter is ~100 nm, and the lengths are above 500 nm (Stanislaw Staszic AGH University of Science and Technology in Cracow, Geology, Geophysics and Environment Protection Department, Mineralogy, Petrography and Geochemistry Chair. "Minerals of the kaolinite group as precursors of mineral nanotubes" the Ph. D. thesis of Jakub Matusik, Cracow 2010). It is characteristic for this mineral that both sides and edges of the plates exhibit different physical-chemical properties, which makes the sorption capacity of the mineral vary high. Pore sizes in the halloysite grains range from several tenths to several hundred nanometers.

The Dunino deposit was widely described and discussed, for example by Pyrzynski et al. in the publication "Halloysite - properties, functionalization, and use" ("Environment and industry", vol. IV, collective work edited by G. Schroeder and P. Grzesiak, 2013, p. 249, ISBN 978-83-62108-28-2), which is hereby included by reference. Briefly, the publication indicates that due to its "*specific laminar-tubular structure halloysite found in Poland can be converted into the active agent useful in many branches of industry and environment protection", among which "use as a sorption agent, in the manufacture of isolating mats, coagulants, cosmetic clays, fertilizers, biofilters, feed additives and painting pigments"* was indicated. However, the authors describe only general directions of use for air cleaning in animal farms, reduction of aflatoxins B1, bacteria and fungi, and use of halloysite as a component influencing positively the health state of the animals, however without any reference to optional healthy influence of such an additive. The publication indicates only the properties of Dunino halloysite for reducing mycotoxins, bacteria and fungi, which could find use in the case of low-quality contaminated feed.

Another publication concerning Dunino halloysite indicated potential use of the mineral in the hog raising (Z. Dobrzanski et al., "Effect of halloysite on the profile of fatty acids in muscles, liver and back fat of fatteners"; Acta Scientiarum Polonorum No. 11(3) 2012, p. 49-58). The publication describes the results of studies concerning feeding the fatteners with halloysite. However, the publication concerns adding halloysite to the fatteners' feed. Due to the separate character of this group the obtained study results cannot be transposed to use of halloysite in feeding the animals of another groups.

Thus, neither of the documents known from the prior art discloses such additive, which could improve significantly parameters of the animal material obtained by the broiler raising, and at the same time would very positively influence the health of the raised birds, by improving their general condition and vitality, raise the well-being level of the animals, improved significantly the environmental conditions and at the same time was entirely friendly to the environment.

The present invention relates to Dunino halloysite for use as an additive for the poultry feed material. Preferably, Dunino halloysite is used in the amount of 0,5 do 4%, more preferably, from 0,5 to 2%, most preferably is about 1% in relation to the entire weight of the feed material.

According to the present invention halloysite of Dunino can be used as an individual feed additive, or together with another additives commonly used in the art. Among such additives can be mentioned:

- probiotics - as used herein they mean any products containing living selected bacteria and yeast strains. As feed probiotics, the most commonly used are the lactic acid bacteria of the *Lactobacillus, Bifidobacterium, Streptococcus* groups, and also the yeast from the *Sacharomyces Cerevisiae* strain. Probiotics act beneficially for the health in the digestive tract - by immunomodulation and preserving the proper physiological flora.
- feed enzymes as used herein mean any of the exogenous enzymes (provided to the organism from the outside) or produced by the microflora colonizing the digestive tract, which enzymes assist or complement activities of the endogenous enzymes, influence better digestion and utilization of some stodgy alimentary components.
- flavor additives as used herein mean any flavor additives added to feed materials, especially such that are consumed by the animals due to their specific taste or aroma;
- dyes, as used herein mean any substances adding color to the feed material. Dyes are added in principle to fulfill requirements and expectations of a consumer of the animal products which require products of intense and encouraging color. As dyes, natural or synthetic carotenoids are often used;
- preservatives, as used herein mean any substances which promote inhibition or reduction of unfavorable processes taking place in the feed material which lower potentially value of the feed, taking place, for example, by the activity of microorganisms;
- detoxicants, as used herein mean any substances containing an active group (e.g. aluminosilicates, active carbon, any minerals), which are not digested, but they are able to bind toxic metabolites and undesirable secreted mycotoxins, due to which they pass the digestive tract in an unchanged form and are excreted with excrements, without harmful effect on the animal organism;
- coccidiostatics, as used herein mean any preparations added to the feed for the prophylaxis or treating coccidiosis;
- other agents used commonly at the manufacture on industrial feed, such as: vitamins, emulsifiers, stabilizers, gelling and fluffing substances, which substances are used for improving physical-chemical properties of the feed materials;
- antioxidants, as used herein mean any substances added to the feed, to protect components susceptible to oxidation (np. vitamins, carotenes), to enable longer storage of the feed without changes lowering its properties.

Thus, according to a preferred embodiment of the invention, Dunino halloysite is used along with other feed additives comprising probiotics, feed enzymes, exogenous substances, and other additives such as aroma, flavor additives, preservatives, or other detoxicants comprising other aluminosilicates, active carbon, any minerals, coccidiostatics, emulsifiers, stabilizers, gelling and fluffing preparations and antioxidants.

Poultry, and in particular meat poultry, is a type of birds which is very sensitive to many factors comprising *inter alia* living conditions, including farming with artificial photoperiod only, or feeding regime leading to a fast weight gain. This is why many a time it is very important to supplement additionally the diet of the raised poultry, in the manner fitting to the actual needs.

Thus, to protect birds against deficiency of the substances indispensable for their proper functioning and taking into account their specific susceptibility to any potential deficiencies, according to the preferred embodiment of the invention the feed material contains additionally macroelements, such as for example sodium, chlorine, calcium, phosphorus. Equally preferably, halloysite contains additional microelements such as copper, cobalt, iron, zinc, manganese and iodine. In yet another preferred embodiment halloysite of the invention is additionally enriched in vitamins.

Moreover, if it is preferred, as a prophylaxis of the prospective infections, the feed material may contain antibiotics. Thus, in the preferred embodiment of the invention the feed material additionally contains antibiotics.

Preferably, halloysite of the invention finds its use in the feed material, employed under various names at various stages of fattening, that is at the period of early growth, at the period of the growth proper (weight gain) and at the final growth phase, defined, for example, as mixtures of the grower I type, particularly the grower II type, or the finisher type, as well as mixtures of the Broiler I, Broiler II, Broiler III type, thus in all mixtures intended for broilers, used from the beginning to the end of fatting regardless of a composition and name.

For example, the mixture of the grower I type is defined herein as any mixture fed to the birds after the period of the initial growth, at the mass gain period.

As a finisher mixture, any mixture fed to the birds for several days, usually 2 to 3 days, before their butchering is defined.

Preferably, the feed material is a natural feed material of a vegetable or animal origin, even more preferably of a vegetable origin, or an animal origin. Additionally, according to preferred embodiment, in the feed material the mineral feed can be present, such as feed chalk, ground shells and eggshells, bone meal in particular.

According to the invention, halloysite of the invention is employed both in the case of mixtures contaminated with toxins, and equally, with desired effects attained, in the case of high-purity mixtures free of mycotoxins, such as should be used in the properly operated raising.

When using feed of a lower quality, the results obtained can be observed on another level. Use of other additives to improve the feed quality by, *inter alia,* binding mycotoxins, is connected with different mechanisms and does not lead to the effects obtained by the inventor, but solely removes harmful activity of the toxins, and if this is done efficiently, it can lead to obtaining effects of fattening only close to the ones obtained by use of the high-quality feed. This is related to the fact that the effects provided according to the present invention arise from other mechanisms than the toxin binding as such. The effect of using Dunino halloysite, due to its exceptional properties, goes beyond the effect of properly operated farming (including use of good-quality feed free of toxins and heavy metal contaminants) and provides unexpected effects discussed hereinbelow.

According to the preferrered embodiment of the invention, halloysite of the invention finds use as an additive to the feed materials intended for feeding broilers, preferably broilers of the meat type, such as for example Ross 308 broilers.

The present invention pertains also to a method for increasing growth, vitality and yield of the poultry raising, quality and nutritional values of the meat, health of the birds, well-being of the animals and improvement in environmental conditions, wherein the method comprises adding to the feed mixture Dunino halloysite of the invention. In a particularly preferred embodiment of the method of the invention, Dunino halloysite is added in the amount of about 1% by weight of the total mass of the feed material.

The terms employed herein such as the feed material or feed mixture, and the like, have the meanings as generally used, including the meanings according to definitions introduced by the Regulation (EC) No 767/2009 of the European Parliament and of the Council of 13 July 2009 on the placing on the market and use of feed, amending European Parliament and Council Regulation (EC) No 1831/2003. Here, for example, "the feed material" means products of vegetable or animal origin, whose principal purpose is to meet animals' nutritional needs, in their natural state, fresh or preserved, and products derived from the industrial processing thereof, and organic or inorganic substances, whether or not containing feed additives, which are intended for use in oral animal-feeding either directly as such, or after processing, or in the preparation of compound feed, or as carrier of premixtures. The term "compound feed" means a mixture of at least two feed materials, whether or not containing feed additives, for oral animal-feeding in the form of complete or complementary feed.

These and other aspects of the present invention will become more clear in the light of the following practical realizations of the invention and in the light of the illustrative drawing, on which:

Fig. 1    represents a photomicrograph of the small intestine of the broiler chicken Ross 308 registered for a section sampled from an individual of the control group;

Fig. 2    represents a photomicrograph of the small intestine of the broiler chicken Ross 308 registered for a section sampled from an individual of the experimental group;

**Preliminary example -Broiler raising with the use of Dunino halloysite**

All the studies described in the examples of practical realization of the invention were conducted on the material obtained from an experimental broiler farm.

The farming was conducted on the poultry farm in two duplex livestock buildings (henneries), with a space of 1000 m$^2$ each. The nestlings, broiler chicks Ross 308, were randomly divided into two groups: a **control group (K)** and an **experimental** group **(D)** each with 18090 chicks and the groups were kept in separate henneries denoted K and D, respectively.

Within 7 days of the chicken's life in their diet, both in the control and experimental group, a starter type mixture was used, which did not include Dunino halloysite in its composition. In the following day of life, i.e. from 8th day of chicken's growth, the diet of broilers was diversified depending on the hennery. Birds raised in the hennery of the control group (K) were fed with rich mixtures (grower I, grower II and finisher) respectively, not enriched with the Dunino halloysite additive. Broilers of the experimental group (the hennery D) were given mixtures (grower I, grower II and finisher) which additionally contained Dunino halloysite in the amount of 1,0% (10 kg per 1 t of the mixture). The feed and water were given *ad libitum* throughout the complete broiler production cycle, controlling continuously the amount of the feed given (kg/day) and controlling periodically the water consumption (liters/day). The process of supplying the feed was conducted by means of feeding systems which was controlled automatically. During the fattening period no lighting program was applied - the broilers were exposed round-the-clock to the artificial light.

To assess values of indices confirming the unexpected effects of using Dunino halloysite in feeding the broiler chicken, numerous complementary studies were conducted.

The studies included laboratory tests, which were conducted on 40 randomly selected Ross 308 broiler chicken including 20 subjects from the experimental group (10 hens and 10 cocks) and 20 subjects from the control group (10 hens and 10 cocks). On the slaughter day blood was collected from the birds, followed by assessing carcass weight and carcass parameters such as: the breast weight, the percentage of the breast in the carcass, the liver weight, the percentage of the liver in the carcass, the gizzard weight, the percentage of the gizzard in the carcass and the proventriculus weight and the percentage of the proventriculus in the carcass.

Microstructural studies were also conducted. In the studies fragments of the pectoral muscles sampled from the right-hand side of the carcass from all analyzed chicken, and also fragments of the liver and small intestine were used. Based on 100 randomly selected muscle fibers in every preparation analyzed, the diameter of muscle fibers was assessed.

Additionally, to determine the acidity, color, free seepage and tenderness of the meat, the technological studies were conducted. The studies used fragments of the pectoral muscles sampled from the left-hand side of the carcass from all analyzed chicken.

Moreover, morphological and densitometric analysis of bones was conducted. The first stage of the study was to determine morphometrical parameters of the femoral and tibial bone: the weight, length, proximal epiphysis width, distal epiphysis width and shaft width.

With the blood collected from the birds of the control and experimental group biochemical indices were determined such as: triacylglycerol, cholesterol, lipoprotein HDL and LDL fraction concentrations.

**Discussion of the obtained results.**

The following describes unexpected and very beneficial results which were obtained during the study of use of the Dunino halloysite additive in the compound feeds for the broiler chicken.

With respect to obtained results particular attention was paid to the indices which in a significant way depart from the values obtained so far in other studies known from the prior art or the parameters comprising the unexpected effect never referred to as yet in the published study results in the prior art.

As mentioned above, Dunino halloysite distinguishes itself by a specific spatial structure and properties, which lead to obtain, apart from a very meaningful effect of increasing the amount of poultry meat, unexpected effects beneficial for the health of both birds and people as consumers, and beneficial environmental changes.

In Dunino halloysite, structures of the three existing forms (flat surface plates, partly involuted plates, and nanotubes) interpenetrate. In the following, the results are described of using compound feeds with participation of such Dunino halloysite. The percentages given, if not indicated otherwise, are specified in proportion to the birds maintained in the same environmental conditions and fed with the same mixtures, but without Dunino halloysite.

*Microstructural analysis*

For the microstructural studies, fragments of the pectoral muscles from the right-hand side of the carcass from all analyzed chicken were sampled, as well as fragments of the liver and small intestine. The liver and intestines were fixed in 10% formalin, and following the washing, they were dewatered in increasing concentrations of ethyl alcohol and exposed in xylene, followed by embedding in paraffin. The paraffin blocks were sliced on the rotating microtome into the sections 6 $\mu$m in width. The ready preparations were stained with hematoxylin and eosin, encapsulated in Canada balsam and analyzed under the light microscope Nikon E600 (Japan).

Next, the sampled fragments of the pectoral muscles were freezed in liquid nitrogen, and stored at -80°C until analyzed. In the subsequent step, the histological material was attached to the holders by means of the frozen tissue medium OCT Embedding Matrix from CellPath, followed by cutting in the cryostat of the Slee Mev type (Germany) at -20°C into the sections of 10 $\mu$m width. The sections were attached to the microscope slide of the Star-Frost type precoated with Poly-L-Lysine (Sigma). The ready preparations were stained with hematoxylin and eosin, encapsulated in Canada balsam. On the basis of 100 randomly selected muscle fibers, in every analyzed preparation, the diameter of the muscle fibers was assessed, and histopathological assessment of the pectoral muscles was also conducted which covered such changes as: the change in the muscle fiber size (atrophy, hypertrophy - giant fibers), the change in their shape (triangle, trapezoidal, elongated), the degenerative changes (necrosis with phagocytosis) and hypertrophy of the connective tissue. The extent the pathological changes was expressed in percent per 200 muscle fibers with the exception of hypertrophy of the connective tissue, which was assessed subjectively according to the following scale: "0" - no changes, "+" - change to the small extent and "++" - very extensive change.

The analysis of microscope preparations was conducted by means of a light microscope Nikon E600 (Japan), and the measurements were made by use of the image analysis computer software MultiScan v. 14.02.

*Determination of technological parameters of meat*

For the technological studies, fragments of the pectoral muscles from the left-hand side of the carcass from all analyzed chicken were sampled. On the basis of the obtained materials, the following parameters of the obtained meat were determined: acidity, color, free seepage and tenderness of the meat.

*Acidity* of the meat was determined by means of a CyberScan10 pH-meter equipped with the glass electrode for examination of meat. The measurement of pH at 24 hours ($pH_{24}$) after butchering was conducted by placing the electrode at the angle of 45° at the half-thickness of the muscles stored at +4°C.

*Color* of the pectoral muscles was determined after 24 hours of storing the samples at +4°C on the L*a*b* scale in the colorimetric model of the color space (CIElab 1976 space) by means of the Minolta CR310 colorimeter.

*Meat juice seepage* (free seepage) was determined after 24 hours of storage of the muscle samples weighing about 80 g at +4°C. The amount of seepage was calculated by the formula:

$$SEEPAGE\ [\%] = [(muscle\ weight\ before\ cooling - muscle\ weight\ after\ cooling)\ /\ muscle\ weight\ before\ cooling]\ x\ 100\%$$

*Tenderness* (cutting force) was determined based on the measurement of maximum force needed to cut samples of the roasted muscles by use of strength testing machine Instron 5542 provided with the Warner - Bratzler cutting device. Directly after 24 hours of storage of the muscle samples at +4°C, muscle fragments were sampled. From the roasted meat at 180°C until the internal temperature reached 78°C, following 45 minutes of cooling at the room temperature, samples of the muscles as cylinders with the 1,1 cm diameter and 3 cm length were cut along the muscle fibers. The thus prepared muscle samples were cut with the Warner-Bratzler knife with the triangular notch in the direction perpendicular to the direction of the muscle fibers. During the test, the knife speed was 1,5 mm/s. The result was presented as a value of the force acting against the cross-section area (N).

*Morphological and densitometric analysis of the bones*

Diseases of the skeletal system of the birds constitute a very serious problem of the present-day intensive poultry production. This concerns in particular the birds of very high developmental and production indices, characterized by the very intensive growth. They are subject to novel problems, often with unclear aethiopathogenesis, with the skeletal system, disorders of bone mineralization, resulting in emergence of deformations of the pelvic limb bones, and the tibial bone in particular. In the poultry of the meat type numerous metabolic diseases of the bones appear, such as e.g. rickets and osteomalacia (Huff et al. 1999) and disturbances in the ossification process, which attack mainly the pipe bones. However, the most common anomaly is dyschondroplasia of the tibial bone (TD) concerning, first of all, the cocks (Peters et al. 2002, Olkowski et al. 2011). That is why in the present studies, in the case of the densitometric analysis, they were concentrated on the tibial bone of the cocks.

The analysis of the morphometrical and densitometric parameters of the bones were conducted on 20 randomly selected chicken - Ross 308 broiler cocks, with 10 subjects in the experimental group and 10 in the control group.

The first step of the study was determination of the morphometrical parameters of the femoral and tibial bone such as: the weight, length, proximal epiphysis width, distal epiphysis width and shaft width.

In the second step of the study, the densitometric analysis, it was determined by means of the densitometer: the mineral density of the bone tissue - BMD, expressed in $g/cm^2$ and mineral content in the bone tissue - BMC, expressed in grams. In the subsequent step, by means of the peripheral quantitative computer tomograph (pQCT) analysis was conducted of the bone tissue structure in proximal epiphyses (at the level of 18% of the bone length from the proximal epiphysis). This analysis site was selected at purpose, since this is the place where most common deformations and fractures appear. The average volumetric bone mineral density - vBMD ($mg/cm^3$) was analyzed.

The last step in the study was determining the mechanical properties of the tibial bones. Based on the three-point crushing test, mechanical properties of the bones were determined. The tests were conducted by means of the strength testing machine Instron 5542.

*Determination of the biochemical indices of the blood*

Many factors influence values of the biochemical indices in the blood of the birds, including the age, sex, species, race, feeding, physiological condition and raising technology. Said indices are varied, in consequence of both physiological and pathological factors. The plasma lipids comprise a mixture of free fatty acids, neutral fat, phospholipids and cholesterol esters. Their level is decided, first of all, by the physiological condition of the animal. In the growth period of the birds, the HDL lipoprotein fraction is accountable for the transport of cholesterol from the liver to the blood in greater part than the LDL (see i.a. publications by Hermier et al., "A density gradient study of lipoprotein and apolipoprotein distribution in the chicken", Gallus domesticus. Biochem. Biophys, 836, 1985, 105-108; Hermier et al., "Characterization of dietary-induced hypercholesterolemia in the chicken", Biochem. Biphys Acta, 1124, 1992, 178-184; and Hermier et al., "Plasma lipoprotein profile in fasted and reefed Chickens of two strains selected for high or low adiposity", J. Nutr., 114, 1984, 112-121; included herein by reference). The LDL and VLDL fractions in the broiler chicken are found in minor amounts as compared with the HDL. Due to high sensibility for dietetic modifications sexually immature chicken are a perfect model for the studies of the cholesterol metabolism (see i.a. the publication by Castillo et al., 1999). Triacylglycerols perform in the animal body a function of a high-energy fuel. They are also deposited in the form of adipose tissue as a storage material. On the other hand, the mineral compounds (calcium, phosphorus) take part in the physiological and biochemical processes, being requisite to the proper functioning of the body. They are building blocks of bones and soft tissue, take part in energy metabolism, and also take part in pH and osmotic pressure regulation.

In the blood collected from randomly selected birds of both, control and experimental groups, the triacylglycerol, cholesterol, HDL and LDL lipoprotein fraction, calcium (Ca), phosphorus (P) concentrations and alkaline phosphatase (ALP) activity was determined by means of kits from Pointe Scientific Polska.

Statistical analysis

Discussion of the obtained results:

**Example 1.- Determination of the production indices**

The resulting production indices obtained for the Ross 308 broiler chicken are presented in Table 1 below.

**Table 1.** Quality indices of chicken carcasses

|  | Control group | Experimental group |
|---|---|---|
|  | Mean | Mean |
| Weight of the carcass [g] | 1765,04 | 1821,41 |
| Weight of the pectoral muscles [g] | 482,67 | 495,39 |
| Weight of the liver [g] | 65,73 | 57,28 |
| Weight of the proventriculus [g] | 7,99 | 8,03 |
| Weight of the gizzard [g] | 26,63 | 20,91 |

As it is clear from the results shown in Table above, the influence of feeding was observed with regard to such parameters of the carcass as its weight or the weight of the pectoral muscles, though the observed weight gain of the carcass and pectoral muscles in combination with the decrease in the liver and gizzard weights indicates positive tendency of improvement of the healthy growth of animals.

The obtained results concerning the decreased weight of the gizzard and liver could be attributed to the decrease of the chyme reflux from the duodenum, and thus improvement in digestive processes in the broilers of the experimental group and better daily growth of the birds. At the same time, the lower weight of the gizzard may indicate more effortless process of the digestive mechanisms occurring therein.

**Example 2** - **Microstructural analysis of the obtained carcass material**

No changes of the pathological character were observed in the broiler livers both in the control and experimental groups. Histological picture of the liver demonstrated the regular hepatocyte system forming hepatic lobules with pronounced central veins. Lobule connective tissue is pronounced very weekly and has no proliferative features. In the histological picture no features connected with stagnation or congestion were found. The parenchyma of the organ was the uniform mass of hepatocytes, which were packed in the trabeculae. Hepatocytes had the polygonal shape, contained one (sometimes two) big, oval or spherical cell nuclei. Sometomis the trabeculae were nor clearly visible and in this case the hepatocytes were grouped in groups of 4-6, forming groups of the triangular shape located around the biliary canaliculi. No significant degenerative changes of hepatocytes were observed. In any of the sampled specimens neither changes connected with liver fibrosis, nor degeneration and necrosis of the hepatocytes were observed. In spite of propensity of the birds for steatosis of the liver resulting first of all from their physiological conditioning, such as the high lipid level in the gall bladder or the process of lipogenesis in the liver, no changes were also observed connected with adipose liver degeneration syndrome.

Additionally, the minute inflammatory infiltrations as observed both in the control group and experimental group were formed mainly from lymphocytes and had the separate character and did not characterize with the large range.

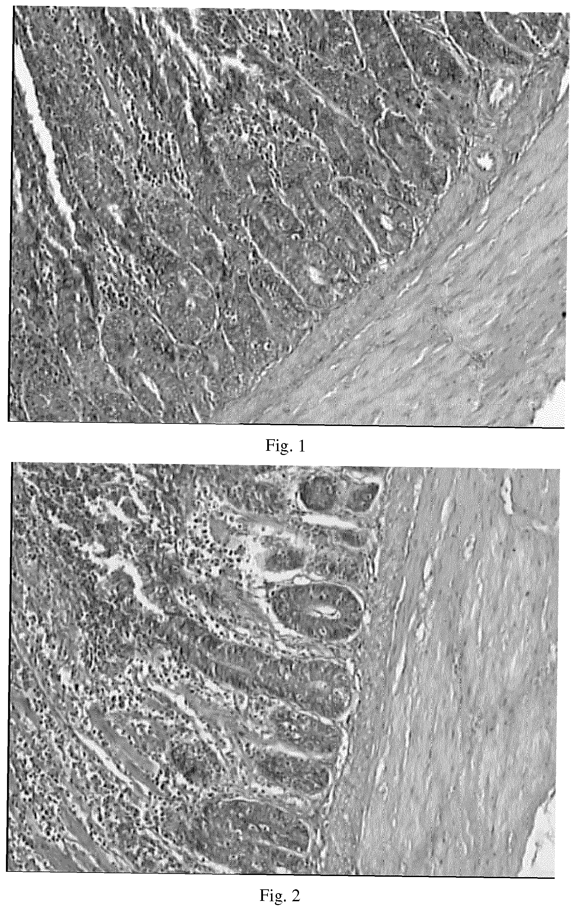

In the case of the analysis of the small intestine, the histological picture of the small intestine both in the control group and experimental group revealed structures characteristic for the properly functioning organ, Fig. 1 and Fig. 2. The intestine wall was built from clearly mutually separated layers: mucosa, submucosa and muscular layer.

However, the intestinal villi, adapting the form of digital prominences covered with the monolayer cylindrical epithelium were better developed in the subjects from the experimental group (Fig. 1, 2). The epithelial cells protruded into the mucosa forming the characteristic tubular glands, so-called vaults. Beside the typical epithelial cells, within the vault epithelium, individual endocrine and goblet cells are visible. Lamina propria of the mucosa, formed from the limp connective tissue, was filling spaces between intestine glands. In the submucosa, formed from the loose connective tissue, numerous blood and lymphatic vessels were observed. Next, the muscular layer in the intestines of the control and experimental animals was well developed and built from smooth muscle fibers, which were laid in two layers: the internal circular layer and the external lengthwise layer.

## Example 3 - Physicochemical parameters of the muscles

The results illustrating the physicochemical parameters obtained by the analysis of the pectoral muscles of the Ross 308 broiler chicken are presented in Table 2 below.

Table 2. Physicochemical parameters and the muscle fiber sizes of the breast muscle of the Ross 308 broiler chicken

| Index | Control group | Experimental group |
|---|---|---|
| | Mean | Mean |
| $pH_{24}$ | 5.93 | 5.89 |
| L* | 52.95 | 52.69 |
| a* | 13.44 | 13.72 |
| b* | 5.84 | 4.12 |
| Free seepage [%] | 1.95 | 1.77 |
| Cutting force [N] | 16.87 | 16.35 |
| Fiber diameter [$\mu$m] | 57.53 | 57.51 |

One of the most important parameters which decide on the quality of the meat, is its acidity. The pH value of the meat, which is the index of the early posthumous glycolysis leading to production of lactate in the tissue, is beside the value of the free seepage and the meat color the key determinant of its quality. In the conducted studies, in both analyzed groups of animals, the pH values measured 24 h after butchering were found to be on the similar level. Moreover, based on the acidity measurement it could be stated that the meat of the analyzed Ross 308 broiler chicken form both groups was characterized by the good quality. No carcasses were found with PSE or DFD features.

One of the most important factors of the consumer's assessment of the meat is also its color, which depends on the amount and oxidation level of the haeme pigments, and its variability decides in the great extent on the quality of the meat. As it was indicated above, said parameter was characterized based on the CIE scale, which defines the muscle color by means of three parameters: L*a*b*, wherein the L* parameter - luminance, determines the lightness of the perceived color, whereas the remaining coefficients express the contribution of the red (a*) and yellow (b*) color in the analyzed color. The conducted studies demonstrated the essential influence of feeding on the b* parameter value, indicating less saturation of the color in the yellow direction in subjects of the experimental group in contrast to the control group. In the case of the remaining parameters of the color (L*, a*) no statistically significant differences were found.

The other significant feature of the meat quality , also very important for the technological processing, is its water absorbability. The majority of water collected in the muscle tissue is kept between the thick and thin filaments due to capillary forces. Said spaces are filled with about 85% of water. After the butchering, in agreement with the degree of denaturation of the cytoskeletal proteins and contraction of the muscle fibers, the seepage of water (meat juice) occurs, the amount of which is requisite to proper appearance of the meat, its behavior on cooking, and influences juiciness perceptible on chewing. In the presented studies no statistically significant differences between chicken of the experimental and control groups regarding the value of this parameter was found. However it should be emphasized that in both the control and experimental groups the assessed parameter assumed the relatively high level.

The subsequent and one of the most important organoleptic features of the meat is its tenderness requisite for its savoriness, thus constitutes the significant factor affecting acceptation of the material obtained from the carcass. The results of the mechanical measurement of the tenderness of the breast muscle of the Ross 308 chicken made by determining the so-called cutting force presented in the present studies confirm that the positive influence of the Dunino halloysite additive on numerous essential parameters is reached while conserving the other ones.

Improvement in fleshiness is a very important task in the farming. It is now known that the meat quality results from the factors connected with feeding, rearing and butchering of the animals, and also depends on the genotype of the raised material. On the other hand, such a progress in perfectioning the muscle mass contributes to occurence of the pathological features in the microstructure of the muscle tissue, resulting in manifestation of the meat imperfection in particular, in the parts of the carcass desired by the meat industry, such as the breast muscle. That is why acquaintance of the muscle tissue microstructure, and recognition of the kind and extent of the changes of the pathological character in particular, can become an important element of the proper and objective assessment of the meat quality or a method of verification or assistance to the present methods of assessment.

After analyzes of the results as obtained in the conducted experiment it was stated that the Dunino halloysite additive to the feed had no significant influence on the size of the muscle fibers of the chicken breast muscle (Table 2).

In the present studies, in both the control and experimental groups, necrosis with phagocytosis appeared in 20% and 15% of the subjects, respectively. Since the process of necrosis with phagocytosis is often accompanied by the hypertrophy of the connective tissue, the amount of which is in turn increased as the result of many disease processes, in the hypertrophic connective tissue the inflammatory cells, or other substances may appear, which are not present w the correct physiological state. The additional risk is connected generally to the fact that the inflammatory infiltrations usually appear perivascularly. No such dependences were noted in the presented studies. The connective tissue hypertrophy occurred in a very small number of subjects and it was not connected with the presence of the necrosis with phagocytosis. Such a low share of the pathological changes of that type in the breast muscle of the chicken results probably from the structure of these muscles, which has a very delicate connective tissue stroma in poultry.

One of the most significant pathological changes of the muscle tissue with the direct relation to the meat quality is the hypertrophy of the muscle fibers, the so-called giant fibers. In the conducted studies no influence of feeding on the giant fiber frequency was found.

In conclusion of the results of the conducted studies it could be stated that the Dunino halloysite additive to the complete compound feeds has no influence on both the muscle fiber size, and also their number and the extent of the histopathological changes in the breast muscles of the Ross 308 broiler chicken.

**Example 4 - Morphological and densitometric analysis of the bones**

In the conducted morphometrical studies, no influence was found with respect to the use in the diet of the Dunino halloysite additive on all analyzed parameters of the bones, both femoral and tibial (Table 3). Intoducing the Dunino halloysite additive to the diet did not also cause substantial changes in the mineral density of the bone tissue (BMD), mineral content (BMC) and average volumetric mineral density of the bone tissue (vBMD) (Table 4). Similarly, in the case of the analysis of the tibial bone strength no significant differences were found between cocks of the experimental and control groups (Table 4).

Thus, it was once again confirmed that the positive influence of adding Dunino halloysite to complete compound feeds for broiler chicken on a number of parameters occurs without deterioration of the remaining ones, which could lead to worsening the resistance to breakage.

**Table 3.** Morphometric parameters of the femoral and tibial bones of the Ross 308 broilers cocks

|  | Control group Mean | Experimental group Mean |
|---|---|---|
| **femoral** | | |
| Weight [g] | 13.16 | 13.57 |
| Length [g] | 81.08 | 82.33 |
| Proximal epiphysis width [mm] | 22.20 | 22.48 |
| Distal epiphysis width [mm] | 22.52 | 23.02 |
| Shaft width [mm] | 9.42 | 9.54 |
| **tibial** | | |
| Weight [g] | 18.89 | 20.20 |
| Length [mm] | 110.52 | 112.56 |
| Proximal epiphysis width [mm] | 28.47 | 28.87 |
| Distal epiphysis width [mm] | 20.94 | 21.22 |
| Shaft width [mm] | 8.99 | 9.30 |

Table 4. Densitometric and strength parameters of the tibial bones of the Ross 308 broilers cocks

|  | Control group | Experimental group |
|---|---|---|
|  | mean | mean |
| BMD [g/cm$^2$] | 0.148 | 0.145 |
| BMC [g] | 0.396 | 0.403 |
| vBMD [mg/cm$^3$] | 225.5 | 225.96 |
| Crushing force [N] | 375.97 | 380.07 |

**Example 5 - Determination of biochemical indices of the blood**

In both, hens and cocks, which within the experiment were obtaining in their diet Dunino halloysite, blood plasma triacylglycerol concentration was significantly lower as compared to the concentration observed in the birds of the control group (Table 5). Such kind of lipids is deposited within the body in the form of the adipose tissue, and the results obtained suggest that processes of lipolysis outweighed processes of lipogenesis in the experimental hens and cocks. On the other hand, the observed blood cholesterol concentration drop in the birds of the experimental group evidences acceleration of synthesis or plasma blood uptake of the lipoprotein fractions by the liver cells. Cholesterol forms the cholesterol domains in the cytoplasmatic and organellum membranes of each cell (see i.a. Marsh, "Cholesterol - induced fluid membrane domains: a compendium of lipid raft ternary phase diagrams", Bioch. et Bioph. Ac., 1788, 2009, 2114 - 2123).

In the conducted studies no influence was found of Dunino halloysite used in the diet on the HDL lipoprotein fraction concentrations in the blood plasma of the chicken. Possible changes in HDL lipoprotein concentrations in the blood would be unfavorable, since they could lead to depositing cholesterol in the blood vessel walls. The LDL lipoprotein concentrations in both the experimental and control hens and cocks was lower as compared with the HDL fraction which is consistent with the results of studies conducted by Hermier et al., (1984) and Hermier and Dillon, (1992). In our own studies, the outright lowering of the LDL lipoprotein concentrations in the experimental hens and cocks was observed.

Table 5. Biochemical indices of the broiler chicken blood

| Specification | Hens | | Cocks | |
|---|---|---|---|---|
|  | Control group | Experimental group | Control group | Experimental group |
| Triacylglycerols mg/dl | 91.71 | 75.47 | 93.97 | 75.9 |
| Cholesterol mg/dl | 154.66 | 134.15 | 158.55 | 155.89 |
| HDL mg/dl | 84.63 | 83.19 | 83.14 | 82.24 |
| LDL mg/dl | 46.68 | 35.15 | 56.9 | 55.46 |
| Ca mg/dl | 12.4 | 12.98 | 10.56 | 12.12 |
| P mg/dl | 6.18 | 7.42 | 6.27 | 6.65 |
| Alkaline phosphatase U/L | 3.87 | 3.59 | 4.7 | 5.35 |

Concentrations of the mineral calcium and phosphorus compounds in the blood in both the experimental and control hens and cocks did not differ. At the growth period, changes in concentrations of these elements are connected with growth dynamics of the skeletal system. Said elements are also included into the intracellular matrix, blood and lymph. In the conducted studies, activity of the enzyme produced by the osteogenic cells - alkaline phosphatase (ALP), or the enzyme connected with the process of calcification of the developing bones, was additionally examined. Its activity undergoes some changes during the body's growth. In the conducted studies, the ALP activity in experimental and control hens did not differ significantly. Control of the calcium and phosphorus levels and the alkaline phosphatase activity in the blood is carried out to exclude disorders in the bone mineralization processes. Even minute changes in their concentrations can disturb activities of life-important systems and organs (see for example A. Krasnodbska-Depta et al., "Fizjologiczne wartosci wybranych wskaznikow biochemicznych krwi w surowicy krwi kurczt brojlerow", Med. Wet. 2000, 56:456-460.). The obtained results confirmed that use of the Dunino halloysite additive has no effect on processes connected with bone mineralization within the growth period of both hens and cocks.

**Summary of the results obtained in Examples 1-5**

Use of the Dunino halloysite additive in the feed exerts a minute effect on the indices such as the weight of the carcass and the weight of the pectoral muscles, but in combination with the statistically significant influence on the parameters of the liver and gizzard, in the case where significant decrease in the weight of the organs in the chicken of the experimental group was observed, the minute weight gain of the carcass and pectoral muscles observed appeared to be significant. Moreover, the effect of reduction of the gizzard confirms the positive influence of the Dunino halloysite particles, the presence of which in the muscular part of the stomach contributes to more effective process of feed digestion, reduction of its residence time within the stomach, and then better digestion in further sections of the digestive tract. The shorter residence time of the feed it the gizzard causes reduction of its growth and weight.

No changes with the pathological character, perfect formation of the small intestine structures characteristic for the properly functioning organ, as well as the well-formed muscular layer, evidence the correct growth and undisturbed alimentation process of the animals fed with the feed with the Dunino halloysite additive.

The meat from the analyzed chicken was characterized by the good quality, where in the case of the carcasses derived from the experimental group, the desired lesser color saturation in the yellow direction was observed. Moreover, the Dunino halloysite additive had no effect on both the muscle fiber size, and the amount and extent of the histopathological changes in the breast muscles of the chicken. The results from the mechanical measurement of the breast muscle tenderness, made by determining the so-called cutting force, confirm the lack of influence of the feeding on the value of this index. The Dunino halloysite feed additive had no significant effect on the muscle fiber size in the breast muscle of the chicken, did not cause changes in the bone structure, which could lead to decrease in the resistance to fracture. Conversely, the increase in the femoral bone and tibial bone weights was observed, which led to the increase in its strength, resulting in reducing the number of the health problems of various types (common between chicken broilers) related to the growth and functioning of the skeletal system of the legs. No influence of Dunino halloysite on the HDL lipoprotein fraction concentration in the blood plasma of the chicken was also found, whereas reduction in the LDL lipoprotein fraction concentration in the hens and cocks of the experimental group was observed. Moreover, reduction of the total cholesterol concentration was observed, which is very important for the consumers on account of reducing cholesterol content in the meat to raise its dietetic value. The concentration of calcium and phosphorus compounds in the blood of the experimental and control hens and cocks did not differ statistically, and the Dunino halloysite additive has no influence on processes connected with bone mineralization during growth of both hens and cocks.

**Example 6 - Assessment of the general condition, including mortality, amount of the feed ingested and the accompanying broiler weight gain**

Moreover, in the conducted studies, the reduction in mortality (number of deaths) in the flock of up to 5% was observed. Additionally, in the experimental group, the increase in body weight was also recorded in comparison with the control group of 5,7% on 37 day of fattening. The average daily body weight gains of the chicken within the period of from day 8 (additive delivery started) to day 37 of the fattening were higher for 6,7% in the experimental group At the same time the feed conversion ratio (the FCR index = use of the feed per 1 kg of the weight gained) was 7,6% (1,69 and 1,57) higher in the control group within the period from day 8 to 37 and 7,5% (1,86 and 1,73) within the entire period of fattening. This indicates better utilization of the feet with the Dunino halloysite additive. This effect has not only economical, but also ecological sense for the raiser.

The estimated EPEF index (European Production Efficiency Factor), commonly used for the assessment of the actual productivity resulting in quality of the meat poultry farming, calculated for the entire period of fattening was 9,97% higher for the experimental group in relation to the control group.

Said index was calculated on the basis of the following formula

$$EPEF = \frac{(100\% - \% \text{ mortality rate}) \times \text{average final body weight (kg)}}{(\text{days of fattening} \times FCR)}$$

The obtained result confirmed the significant improvement of the growth of broilers, which were fed with 1% of the Dunino halloysite additive.

**Example 7 - Assessment of the water uptake, food assimilation, bedding humidity and number of diarrhoea cases in the birds**

In the conducted studies, significant lowering of water uptake by the birds of the experimental group and substantial reduction in polluting the bedding with high humidity droppings were observed. The water uptake was measured in control and experimental henneries at the period of between 15 and 23 day of life.

Within said period, water consumption in the control group was 7,8% higher. Then, within the period from 33 day from completion of the fattening the water consumption in the control group was 4,8% higher. The effect of such reduction in water uptake was reduction in polluting the bedding with high humidity droppings, which as ascribed to reduction of the number of diarrhoea cases in subjects of the experimental group, and which was in turn reduced due to improving the health of the birds' digestive tract.

Relative humidity of the bedding was 8,4% lower. Contact of the birds with the excessive moist bedding can lead to creation of breast blisters and abnormalities of legs, and chafes. Reduction of the bedding humidity is a circumstance which promotes not only wholesomeness of the birds, but also quality of the meat.

Further very important factor influencing quality of the bedding is the relative air humidity (RH). Within the experimental hennery, it was lower than 17,5%.

The beneficial change was also observed in the case of the bedding pH, which was 9,5% lower. With the lower pH of the bedding, proliferation of microbes is inhibited, which is the next factor influencing wholesomeness and well-being of the birds. It was observed on the experimental hennery that the chicken included in the study are more clean and less chafed by the bedding. This observation was confirmed by the opinion of the veterinarian who supervised butchering: "the butchered chicken were differing significantly, chiefly due to different hygienic condition of the animals from both henneries. Broilers originating from the experimental group were in a better condition, more clean and less chafed by the bedding. The obtained meat had the good quality, was free from the prohibited substances, without visible damages or complications connected to diseases".

The positive environmental consequences result also from 48% reduction of ammonia release from the chicken droppings discussed above.

Moreover, in experimental group nitrogen utilization coefficient calculated by the index method was 28,6% higher. The calculations employed the nitrogen content in AIA (Acid Insoluble Ash) that is determined on the basis the nitrogen content in the dry weight of the feed and droppings. This parameter is the illustration of better utilization of the proteins present in the feed and is one of the causes of the lower FCR with the simultaneous higher weight gain. As compared to the control, $CO_2$ concentration was also 6% lower. The above-mentioned main environmental benefits are only initiating factors for a number of the remaining benefits, which are identifiable on the basis of the present knowledge level. To better illustrate the scale of the invention, it could be quoted that to obtain 1 ton of the slaughter broilers, feed demand will be 130 kg lower due to the use of 1% of the Dunino halloysite additive. Considering poultry production level in Poland at 2,7 million tons a year, not only the scale of the economical effect, but first of all the scale of the environmental effect, is clearly visible.

Moreover, the subjects of the experimental group were found to exhibit reduction of the chyme flow rate through the digestive tract of the chicken, which is further connected with the increase in the degree of absorption of the nutritional components to ensure the faster and healthier weight gain.

**Example 8 - Comparative analysis of use of Dunino halloysite and other minerals from the silty mineral group used in feeding the poultry.**

To compare the influence of Dunino halloysite on the fattening effect with other commonly used minerals, the results obtained in the experimental studies were matched with the literature data found in the publications, which are hereby incorporated by reference. The criterion of selection a publication for the comparison was the similarity of the described experiments with the use of another silty minerals and the presentation method of the results which enable comparing the published results with the result obtained by the inventor or possibility of their recalculation to enable the comparison. Comparisons concern effects, which were obtainable in the experiments with other minerals, and demonstrate the unexpected level of the beneficial effects disclosed in the invention. The remaining effects obtained in the invention find no comparison in the prior art studies, and their appearance was unexpected.

M. Safaei Katouli et al., "Effect of different levels of kaoli, benzonite and zeolite on Broilers performance", Journal of Biological Sciences 10(1), 2010, 58-62. Methodology of the studies as discussed above and along the description presented in the publications used for the comparative analysis is very similar. The collected data are compiled in Table 6 below.

**Table 6 -** comparison of the gain of broilers fed with a mixture with the Dunino halloysite additive and literature data for broilers fed with mixtures with other mineral additives

| 8 to 36 fatting days | | | weight gain | % for the control | FCR | % for the control |
|---|---|---|---|---|---|---|
| experiment | additive | % additive | | | | |
| Halloysite CIECH | no additive | control | 1955 | | 1.93 | |
| | halloysite | 1% | **2070** | **5.9** | 1.76 | **8.8** |

(continued)

| 8 to 36 fatting days | | | weight gain | % for the control | FCR | % for the control |
|---|---|---|---|---|---|---|
| experiment | additive | % additive | | | | |
| Journal of Biology Science 10(1) 2010 | no additive | control | 1444 | | 1.92 | |
| | kaolin | 1.50% | 1494 | 3.5 | 1.89 | 1.6 |
| | | 3% | 1506 | 4.3 | 1.81 | 5.7 |
| | bentonite | 1.50% | 1443 | 0.0 | 1.91 | 0.5 |
| | | 3% | 1468 | 1.7 | 2.00 | -4.2 |
| | zeolite | 1.50% | 1543 | 6.9 | 1.92 | 0.0 |
| | | 3% | 1468 | 1.7 | 1.83 | 4.7 |

The broilers under study according to the Journal of Biological Sciences publication were Ross 308 breed broilers, the same as employed in the present invention studies.

The comparison concerns the fatting period from day 8 to 36, since the source data enable the comparison of this period. As it can be seen from Table 6, adding 1,5% of zeolite only led to the better weight gain effect in relation to the control in comparison to the result of adding 1% of halloysite in relation to the control. Use of 1% of the halloysite feed additive provided the slightly lower broiler weight gain effect (5,9%) as compared to the effect gained by use of 1,5% of zeolite, where the weight gain more than 6,9% was obtained. Use of zeolite could be deemed economically justified. However, the inventor demonstrated that use of 1% of halloysite provided not much lower additional weight gain in relation to the gain obtained with the use of zeolite (1% difference), but is accompanied by significant reduction (8,8%) of the amount of feed per gaining 1 kg of the bird's weight as compared with the lack of change in this index in the use of zeolite. In the light of presentinvention, use of 1% of halloysite becomes economically justified in the industrial setup. The global problem is the improvement in feed conversion coefficient in the animal farming. The invention as presented herein is beneficial in the very broad ecological meaning from this reason, buy also due to consequences of animal raising connected with droppings. With feed consumption reduced as demonstrated, significant reduction of the amount of droppings excreted by the poultry will occur.

The results were also compared with the ones described in the publication by P. Zhopu, et al. "Effect of Dietary Supplementation with the Combination of Zeolite and Attapulgite on Growth Performance, Nutrient Digestibility, Secretion of Digestive Enzymes and Intestinal Health in Broiler Chickens", Journal of Animal Science 27(9) pp. 1311-1318. The obtained results are shown in Table 7 below.

**Table 7 -** Comparison of the obtained results with the literature data from the Journal of Animal Science 27(9) 2014 publication

| 1 to 42 day of fatting | | | FCR | % for the control |
|---|---|---|---|---|
| experiment | additive | % additive | | |
| Dunino halloysite | no additive | Control | 1.86 | |
| | halloysite | 1 % | 1.73 | **7.0** |
| Journal of Animal Science 27(9) 2014 | experiment I | no additive | Control | 1.81 | |
| | | 50% zeolite + 50% attapulgite | 2.00% | 1.85 | **-2.2** |
| | experiment II | no additive | Control | 1.87 | |
| | | 50% zeolite + 50% attapulgite | 2.00% | 1.85 | **1.1** |

In the conducted comparative studies a mixture (equal parts) of two silty minerals, zeolite and attapulgite was used. The comparison concerns the fatting days from day 1 to 42, since the source data of the publication enable the comparison of this period. In Table 7, the comparison of the obtained FCR indices is shown. Comparison of this index was determined by availability of the data, however the method of its calculation takes into account changes in the obtained weight of the birds in combination with the feed spent to obtain such an effect. This makes it the valuable tool for the comparison. As it can be seen from the data presented in Table 7, in the experiment with Dunino halloysite the FCR was 7,0% lower in relation to the control. The publication describes two equivalent experiments. In one of them, 2,2% increase of the FCR was obtained, with the small decrease of 1,1% in the second one.

The change of this index is a key in assessing the remaining effects of the invention, since the invention is to be utilized industrially, and thus it has to be economically viable. The invention as presented combines numerous benefits with the improvement in production rate, which make the results obtained valuable and useful.

The experiment conducted with a number of combinations was described in the publication by E.J. Day et al. "Silicates in Broiler Diets", Poultry Science 49(1), 1970, pp. 198-202. Use of bentonite and 2 types of kaolinite in many doses was presented therein. In Table 8 below it is shown that use of lower doses (1-3%) in the experiment described in the publication led to more beneficial effects. However, such effects could serve as the justification of the value of the present invention. Among the data presented in the publication there is no information concerning weights of the birds attained in the raising, however, with such changes of the FCR index such data are insignificant for the assessment of utility value of the invention.

Table 8 - Comparison of the obtained results with the literature data from the Animal Biology & Animal Husbandry 6 (2) 2014 publication

| 1 to 35 day of fatting | | | FCR | % in relation to control |
|---|---|---|---|---|
| experiment | additive | % additive | | |
| Dunino halloysite | no additive | Control | 1.51 | |
| | halloysite | 1% | 1.37 | **9.3** |
| Animal Biology & Animal Husbandry 6(2) 2014 | no additive | Control | 1.58 | |
| | kaolin typ I | 5.00% | 1.66 | **-5.1** |
| | | 10% | 1.68 | **-6.3** |
| experiment I | kaolinite typ II | 10.00% | 1.76 | **-11.4** |
| | bentonite | 5.00% | 1.66 | **-5.1** |
| | | 10% | 1.84 | **-16.5** |
| | no additive | Control | 1.88 | |
| experiment II | kaolin type I | 5.00% | 1.98 | **-5.3** |
| | kaolinite type II | 5.00% | 1.96 | **-4.3** |
| | bentonite | 5.00% | 2.04 | **-8.5** |
| | no additive | Control | 1.58 | |
| | kaolin type I | 1.00% | 1.56 | **1.3** |
| | kaolin type I | 2.00% | 1.60 | **-1.3** |
| | kaolin type I | 3.00% | 1.63 | **-3.2** |
| experiment III | kaolinite type II | 1.00% | 1.58 | **0.0** |
| | kaolinite type II | 2.00% | 1.60 | **-1.3** |
| | kaolinite type II | 3.00% | 1.59 | **-0.6** |
| | bentonite | 1.00% | 1.58 | **0.0** |
| | bentonite | 2.00% | 1.58 | **0.0** |
| | bentonite | 3.00% | 1.65 | **-4.4** |

Performed analysis has confirmed that the use of Dunino halloysite as a feed additive, even in the dose at the level of 1% leads to more beneficial effect of fattening as compared to the fattening with the additive of: bentonite, zeolite, attapulgite or kaolinite in various dosages. Thus it is confirmed that the Dunino halloysite additive of the invention provides better results in relation to the weight gain of broilers as compared to use other silty minerals as additives employed in even higher doses. This result in connection with the simultaneous significant reduction of the FCR index value bestows the significant value upon it.

The person skilled in the art will understand that numerous further modifications of the above-described examples are able to be implemented without departing from the general idea of the invention as defined by the appended patent claims.

**Claims**

1. Dunino halloysite for use as an additive for the poultry feed material.

2. Halloysite according to claim 1, **characterized in that** it is used in the amount of from 0,5 to 4%, more preferably, from 0,5 to 2%, most preferably of about 1% in relation to the entire mass of the feed material.

3. Halloysite according to any of the preceding claims, **characterized in that** it is used with other feed additives.

4. Halloysite according to claim 3, **characterized in that** the additives are selected from the group comprising probiotics, vitamins, feed enzymes, exogenous substances, and other additives such as aromatic, flavor additives, preservatives, as well as other detoxicants comprising other aluminosilicates and silty materials, coccidiostatics, emulsifiers, stabilizers, gelling and fluffing preparations and antioxidants.

5. Halloysite according to any of the preceding claims, **characterized in that** the feed material comprises additionally macroelements such as sodium, chlorine, calcium, phosphorus.

6. Halloysite according to any of the preceding claims, **characterized in that** the feed material comprises additionally microelements such as copper, cobalt, iron, zinc, manganese and iodine.

7. Halloysite according to any of the preceding claims, **characterized in that** the feed material additionally comprises vitamins.

8. Halloysite according to any of the preceding claims, **characterized in that** the feed material additionally comprises antibiotics.

9. Halloysite according to any of the preceding claims, **characterized in that** the feed material is a mixture suitable for use in various phases of the broiler fattening.

10. Halloysite according to any of the preceding claims, **characterized in that** the feed material is a natural feed material of the mineral, vegetable or animal origin.

11. Halloysite according to claim 10, **characterized in that** the feed material is a mixture of a vegetable origin.

12. Halloysite according to claim 10, **characterized in that** the feed material is a mixture of an animal origin.

13. Halloysite according to any of the preceding claims, **characterized in that** the mixture is a mixture contaminated with toxins.

14. Halloysite according to any of the preceding claims, **characterized in that** the mixture is a mixture of the high purity free from mycotoxins.

15. Halloysite according to any of the preceding claims, **characterized in that** the poultry are broilers.

16. Halloysite according to claim 15, **characterized in that** the broilers are broilers of the meat type.

17. A method of increasing growth, vitality and yield of poultry, **characterized in that** comprises adding Dunino halloysite to the feed mixture, as defined in any of the claims 1-16.

18. The method according to claim 17, **characterized in that** Dunino halloysite is added in the amount of about 1% by weight of the total mass of the feed material.

Fig. 1

Fig. 2

Europäisches
Patentamt

European
Patent Office

Office européen
des brevets

# EUROPEAN SEARCH REPORT

Application Number

EP 17 19 8964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/335591 A1 (CHAMI AHMED REDA [MA]) 26 November 2015 (2015-11-26) * 13-15; claims 38-56 * | 1-18 | INV. A23K10/00 A23K10/20 A23K10/30 A23K20/20 A23K20/28 |
| X | DATABASE WPI Week 201670 Thomson Scientific, London, GB; AN 2016-48379H XP002777334, & CN 105 767 465 A (HARBIN TIANYI ECOLOGICAL AGRIC CO LTD) 20 July 2016 (2016-07-20) * abstract * | 1-18 | |
| X | DATABASE WPI Week 201631 Thomson Scientific, London, GB; AN 2016-15756A XP002777335, & CN 105 343 664 A (CHEN Q) 24 February 2016 (2016-02-24) * abstract * | 1-18 | |
| X | DATABASE WPI Week 201514 Thomson Scientific, London, GB; AN 2015-110295 XP002777336, & CN 104 222 002 A (QINGDAO ZHONGTAI ANIMAL SPECIALIZED COOP) 24 December 2014 (2014-12-24) * abstract * | 1-18 | |

TECHNICAL FIELDS SEARCHED (IPC)

A23K

-/--

The present search report has been drawn up for all claims

| Place of search | Date of completion of the search | Examiner |
|---|---|---|
| Munich | 16 January 2018 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 19 8964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201426<br>Thomson Scientific, London, GB;<br>AN 2014-E96043<br>XP002777337,<br>& CN 103 521 173 A (UNIV NORTHEAST AGRIC)<br>22 January 2014 (2014-01-22)<br>* abstract *<br>----- | 1-18 | |

TECHNICAL FIELDS
SEARCHED (IPC)

The present search report has been drawn up for all claims

| Place of search | Date of completion of the search | Examiner |
|---|---|---|
| Munich | 16 January 2018 | Georgopoulos, N |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 19 8964

This annex lists the patent family members relating to the patent documents cited in  the above-mentioned European search report.
The members are as contained in the European Patent Office EDP file on
The European Patent Office is in no way liable for these particulars which are merely given for the purpose of information.

16-01-2018

| Patent document cited in search report | | Publication date | Patent family member(s) | | Publication date |
|---|---|---|---|---|---|
| US 2015335591 | A1 | 26-11-2015 | CN | 104981153 A | 14-10-2015 |
| | | | EP | 2938188 A1 | 04-11-2015 |
| | | | JP | 2016511226 A | 14-04-2016 |
| | | | MA | 35295 B1 | 01-08-2014 |
| | | | US | 2015335591 A1 | 26-11-2015 |
| | | | WO | 2014104868 A1 | 03-07-2014 |
| CN 105767465 | A | 20-07-2016 | NONE | | |
| CN 105343664 | A | 24-02-2016 | NONE | | |
| CN 104222002 | A | 24-12-2014 | NONE | | |
| CN 103521173 | A | 22-01-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0551331 B1
- US 3687680 A
- US 4976977 A
- US 5639492 A
- US 20040028678 A1
- US 20080248155 A1
- US 20120219683 A1
- US 20150335591 A1

**Non-patent literature cited in the description**

- **E.J. DAY et al.** Silicates in Broiler Diets. *Poultry Science,* 1970, vol. 49 (1), 198-202
- **M. SAFAEI KATOULI et al.** Effect of different levels of kaoli, benzonite and zeolite on Broilers performance. *Journal of Biological Sciences,* 2010, vol. 10 (1), 58-62
- **M. HADJ AYED et al.** Effect of septolite supplementation on broiler growth performances and carcass yield. *American Society of Animal Science,* 2008, vol. 59, 169-172
- **COSTANZO P.M. ; GIESE R.F. ; LIPSICAS M.** Static and dynamic structure of water in hydrated kaolinites. *Clays and clay Minerals,* 1984, vol. 32, 419-428
- **JAKUB MATUSIK.** Minerals of the kaolinite group as precursors of mineral nanotubes. *Stanislaw Staszic AGH University of Science and Technology in Cracow, Geology, Geophysics and Environment Protection Department, Mineralogy, Petrography and Geochemistry Chair,* 2010
- Halloysite - properties, functionalization, and use. **PYRZYNSKI et al.** Environment and industry. 2013, vol. IV, 249
- **Z. DOBRZANSKI et al.** Effect of halloysite on the profile of fatty acids in muscles, liver and back fat of fatteners. *Acta Scientiarum Polonorum,* 2012, vol. 3 (11), 49-58

- **HERMIER et al.** A density gradient study of lipoprotein and apolipoprotein distribution in the chicken. *Gallus domesticus. Biochem. Biophys,* 1985, vol. 836, 105-108
- **HERMIER et al.** Characterization of dietary-induced hypercholesterolemia in the chicken. *Biochem. Biphys Acta,* 1992, vol. 1124, 178-184
- **HERMIER et al.** Plasma lipoprotein profile in fasted and reefed Chickens of two strains selected for high or low adiposity. *J. Nutr.,* 1984, vol. 114, 112-121
- **MARSH.** Cholesterol - induced fluid membrane domains: a compendium of lipid raft ternary phase diagrams. *Bioch. et Bioph. Ac.,* 2009, vol. 1788, 2114-2123
- **A. KRASNODBSKA-DEPTA et al.** Fizjologiczne wartosci wybranych wskaznikow biochemicznych krwi w surowicy krwi kurczt brojlerow. *Med. Wet.,* 2000, vol. 56, 456-460
- *Journal of Biology Science,* 2010, vol. 10 (1
- **P. ZHOPU et al.** Effect of Dietary Supplementation with the Combination of Zeolite and Attapulgite on Growth Performance, Nutrient Digestibility, Secretion of Digestive Enzymes and Intestinal Health in Broiler Chickens. *Journal of Animal Science,* vol. 27 (9), 1311-1318
- *Journal of Animal Science,* 2014, vol. 27 (9
- **E.J. DAY et al.** *Silicates in Broiler Diets'', Poultry Science,* 1970, vol. 49 (1), 198-202